(19) Europäisches Patentamt
European Patent Office
Office européen des brevets

(11) EP 3 446 257 B1

(12) **EUROPEAN PATENT SPECIFICATION**

(45) Date of publication and mention of the grant of the patent:
**05.04.2023 Bulletin 2023/14**

(21) Application number: **17728707.5**

(22) Date of filing: **19.05.2017**

(51) International Patent Classification (IPC):
***G06N 3/04*** *(2006.01)*

(52) Cooperative Patent Classification (CPC):
**G06N 3/045**

(86) International application number:
**PCT/US2017/033702**

(87) International publication number:
**WO 2017/201510 (23.11.2017 Gazette 2017/47)**

(54) **INTERACTION NETWORKS**

INTERAKTIONSNETZWERKE

RÉSEAUX D'INTERACTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.05.2016 US 201662339703 P**

(43) Date of publication of application:
**27.02.2019 Bulletin 2019/09**

(73) Proprietor: **Deepmind Technologies Limited**
**London EC4A 3TW (GB)**

(72) Inventors:
• **BATTAGLIA, Peter, William**
**Kings Cross**
**London N1C 4AG (GB)**

• **PASCANU, Razvan**
**Kings Cross**
**London N1C 4AG (GB)**

(74) Representative: **Grant, David Michael**
**Marks & Clerk LLP**
**15 Fetter Lane**
**London EC4A 1BW (GB)**

(56) References cited:
• Roozbeh Mottaghi ET AL: ""What happens if..." Learning to Predict the Effect of Forces in Images", , 17 March 2016 (2016-03-17), XP055393245, Retrieved from the Internet: URL:https://arxiv.org/pdf/1603.05600.pdf [retrieved on 2017-07-24]

**Description**

BACKGROUND

This specification relates to neural networks.

Neural networks are machine learning models that employ one or more layers of nonlinear units to predict an output for a received input. Some neural networks include one or more hidden layers in addition to an output layer. The output of each hidden layer is used as input to the next layer in the network, i.e., the next hidden layer or the output layer. Each layer of the network generates an output from a received input in accordance with current values of a respective set of parameters.

Roozbeh Mottaghi et al. "What happens if..." Learning to Predict the Effect of Forces in Images, arXiv: 1603.05600, describes a system that, given a query object in a single RGB image and a force vector, aims to predict the future movement of the object as the result of applying the force to the object. The model integrates a Recurrent Neural Network (RNN) with a Convolutional Neural Network (CNN).

SUMMARY

This specification describes an interaction network for analyzing current states and predicting future states of interacting objects in complex systems. The interaction network includes multiple neural networks that are trained to receive data representing current states of objects at time $t$, together with data representing their interactions. The neural networks process the received data to generate as output data representing predicted subsequent states of the objects at time $t+1$, e.g., predicted consequences of the interactions between the objects.

The invention is set out in claims 1 and 14; further aspects are set out in the dependent claims.

In general this specification describes a computing system that includes an interaction component configured to: receive as input (i) states of one or more receiver entities and one or more sender entities, and (ii) attributes of one or more relationships between the one or more receiver entities and one or more sender entities; and process the received input to produce as output multiple effects of the relationships between the one or more receiver entities and one or more sender entities; a dynamical component configured to: receive as input (i) the states of the one or more receiver entities and one or more sender entities, and (ii) the multiple effects of the relationships between the one or more receiver entities and one or more sender entities; and process the received input to produce as output a respective prediction of a subsequent state of each of the one or more receiver entities and one or more sender entities.

There are also described corresponding methods, apparatus, and computer programs recorded on one or more computer storage devices, each configured to perform the actions of the methods. A system of one or more computers can be configured to perform particular operations or actions by virtue of software, firmware, hardware, or any combination thereof installed on the system that in operation may cause the system to perform the actions. One or more computer programs can be configured to perform particular operations or actions by virtue of including instructions that, when executed by data processing apparatus, cause the apparatus to perform the actions.

In some implementations the (i) states of the one or more receiver entities and one or more sender entities, and (ii) relational attributes of the one or more relationships between the one or more receiver entities and one or more sender entities are represented as an attributed directed multigraph comprising multiple nodes for each entity and one or more directed edges for each relationships indicating an influence of one entity on another.

In some implementations the one or more relationships between the one or more receiver entities and one or more sender entities comprise binary interactions between a receiver entity and a sender entity, and each binary interaction is represented by a 3-tuple comprising (i) an index of a respective receiver entity, (ii) an index of a respective sender entity, and (iii) a vector containing relational attributes of the respective receiver entity and respective sender entity.

In some implementations the one or more relationships between the one or more receiver entities and one or more sender entities comprise high-order interactions, and each high-order interaction is represented by a $(2m-1)$-tuple, where m represents the order of the interaction.

In some implementations the interaction component comprises a first neural network and the dynamical component comprises a second neural network, optionally wherein the first neural network comprises a first multilayer perceptron (MLP) and the second neural network comprises a second MLP.

In some implementations processing the received input to produce as output multiple effects of the relationships between the one or more receiver entities and one or more sender entities comprises: defining (i) a state matrix as a matrix whose i-th column represents a state of entity i, (ii) a receiver matrix as a $N_O \times N_R$ matrix, where No represents the total number of entities and $N_R$ represents the total number of relationships, and wherein each column of the receiver matrix contains zero entries except for the position of an entity that is a receiver of the corresponding relationships, and (iii) a sender matrix as a $N_O \times N_R$ matrix, wherein each column of the sender matrix contains zero entries except for the position of an entity that is a sender of the corresponding relationships; multiplying the defined receiver matrix and the defined sender matrix by the defined state matrix; concatenating the multiplied matrices to generate an input for the first MLP; processing the input using the first MLP to produce as output multiple effects of the relationships between the one or more receiver entities and one or more sender entities, wherein the produced output comprises an effect matrix whose columns represent the multiple effects of the relationships between the one or more receiver entities and the one or more sender entities.

In some implementations the relationships between the one or more receiver entities and one or more sender entities comprise relationships of different types, and concatenating the multiplied matrices further comprises concatenating the multiplied matrices and a matrix representing the relationships of different types to generate an input for the second MLP.

In some implementations processing the received input to produce as output a respective prediction of the state of each of the one or more receiver entities and one or more sender entities comprises: multiplying the effect matrix with a transpose of the defined receiver matrix; concatenating the multiplied effect matrix with the transpose of the defined receiver matrix with the defined state matrix to generate an input for the second MLP; processing the input using the second MLP to produce as output a respective prediction of a subsequent state of each of the one or more receiver entities and one or more sender entities.

In some implementations during a system training process the sender and receiver matrices are constant.

In some implementations the number of output multiple effects of the relationships between the one or more receiver entities and one or more sender entities is equal to the number of input relationships between the one or more receiver entities and one or more sender entities.

In some implementations processing the received input to produce as output a respective prediction of a subsequent state of each of the one or more receiver entities and one or more sender entities comprises aggregating the received multiple effects of the relationships between the one or more receiver entities and one or more sender entities using one or more commutative and associative operations, wherein the one or more commutative and associative operations optionally comprise element-wise summations.

In some implementations the produced respective prediction of the subsequent state of each of the one or more receiver entities and one or more sender entities comprises multiple entity states corresponding to subsequent receiver entity states and subsequent sender entity states.

In some implementations the system is further configured to analyze the produced respective prediction of the subsequent state of each of the one or more receiver entities and one or more sender entities to predict global properties of the one or more receiver entities and one or more sender entities.

In some implementations the interaction component utilizes a first function approximator to model relationships between entities, and the dynamical component utilizes a second function approximator to model the state of the environment in which the entities reside.

In some implementations the interaction component and dynamical component are trained independently.

In some implementations the interaction component and dynamical component are trained end to end using a gradient based optimization technique.

The subject matter described in this specification can be implemented in particular embodiments so as to realize one or more of the following advantages.

An interaction network, as described in this specification, provides a general-purpose, learnable physics engine, and provides a powerful framework for determining properties and predictions of objects and relationships between objects in a variety of complex real-world domains.

Interaction networks, as described in this specification, explicitly separate analyzing relationships between entities or objects from analyzing the entities or objects. This enables interaction networks to automatically generalize their learning across variable numbers of arbitrarily ordered objects and relations, and also to recompose their knowledge of entities and interactions in multiple different ways. Interaction networks take relations as explicit input, allowing them to selectively process different potential interactions for different input data, rather than being forced to consider every possible interaction or those imposed by a fixed architecture. Accordingly, when compared to conventional neural networks, interaction networks as described herein can provide greater flexibility in terms of their processing capabilities, and can help to reduce the computational burden involved in processing multiple sets of (different) input data.

The details of one or more embodiments of the subject matter of this specification are set forth in the accompanying drawings and the description below. Other features, aspects, and advantages of the subject matter will become apparent from the description, the drawings, and the claims.

BRIEF DESCRIPTION OF THE DRAWINGS

FIG. 1 is an illustration of an example process for generating predictions about a future state of a system of interacting objects.

FIG. 2 is a block diagram of an example interaction network.

FIG. 3 is a flow diagram of an example process for simulating a physical system.

FIG. 4 is a flow diagram of an example process for processing an input representing a system of objects and relations to determine effects of relationships between the objects.

Like reference numbers and designations in the various drawings indicate like elements.

DETAILED DESCRIPTION

Representing and reasoning about objects, relations and physics is a central domain of human common sense knowledge, and a basic and important aspect of intelligence. Many everyday problems, such as predicting what will happen next in a physical environment or inferring underlying properties of complex scenes, are challenging because their elements can be composed in combinatorially many possible arrangements. Such problems can be solved by decomposing the scenario into distinct objects and relations, and reasoning about the consequences of their interactions and dynamics.

An interaction network is a model that can analyze data representing a system of objects and relations between objects to generate predictions of future states of the objects and relations between the objects. Interaction networks combine three approaches: structured models, simulation, and deep learning. Structured models are used to exploit rich, explicit knowledge of relations among objects, independent of the objects themselves, supporting general-purpose reasoning across diverse contexts. Simulation provides an effective method for approximating dynamical systems, predicting how the elements in a complex system are influenced by interactions with one another, and by the dynamics of the system. Deep learning is used to couple computing architectures with efficient optimization algorithms to provide highly scalable learning and inference in challenging real-world settings.

Interaction networks explicitly separate analysis of relations between objects from analysis of objects themselves, and assign tasks to distinct models that are fundamentally object- and relation-centric, and independent of observation modality and task specification. This enables interaction networks to automatically generalize their learning across variable numbers of arbitrarily ordered objects and relations, and also recompose their knowledge of objects and interactions in novel and combinatorially many ways. The interaction networks take relationships between objects as explicit input, allowing the interaction networks to selectively process different potential interactions for different input data, rather than being forced to consider every possible interaction or those imposed by a fixed architecture.

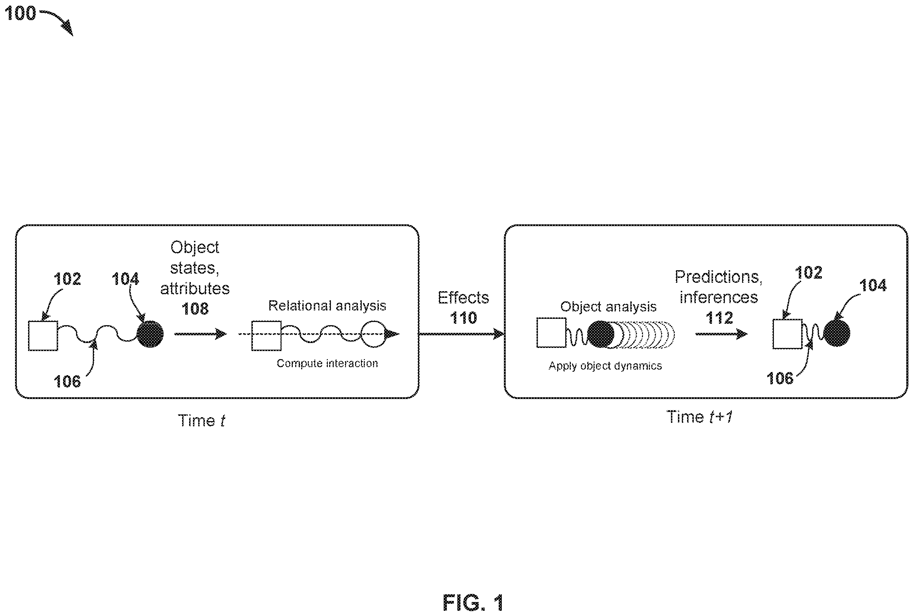

FIG. 1 shows an illustration 100 of an example process for generating predictions about a future state of a system of interacting objects using an interaction network. The illustration shows how information representing a current state of two objects and their relationship is processed to predict a future state, i.e., the dynamics, of the two objects. In particular, the illustration shows how a future state at time $t+1$ of an example fixed object 102 and an example freely moving object 104 that are attached by a spring 106 can be predicted.

To predict the dynamics of a single object $o$, an object-centric function $f_O$ is used. The object-centric function takes the object's state, $o_t$ at time $t$ as input, and outputs a future state, $o_{t+1}$. If two or more objects are governed by the same dynamics, $f_o$ may be applied to each, independently, to predict their respective future states. However, if the objects interact with one another, as in the case of the fixed object 102 and freely moving object 104 illustrated in FIG. 1, $f_o$ is insufficient because it does not capture their relationship. For example, two objects may sometimes be related through one or more directed relationships that causes one of the objects to influence the other. For example, as illustrated in FIG. 1, the fixed object 102 is related to the freely moving mass 104 through the spring 106. The fixed object 102 influences the behavior of the freely moving object 104 through the spring 106.

The effect of the interaction between two objects, $e_{t+1}$, can be predicted by a relation-centric function, $f_R$. The relation-centric function $f_R$ takes as input the state of a first object $o_1$ and state of a second object, $o_2$, as well as attributes of their relationship, $r$:

$$e_{t+1} = f_R(o_{1,t},\ o_{2,t}, r).$$

The object-centric function $f_o$ may then be modified so that it can take both $e_{t+1}$ and the receiver's current state, $o_{2,t}$ as input, enabling the interaction to influence its future state, $o_{2,t+1}$,

$$o_{2,t+1} = f_O\left(o_{2,t}, e_{t+1}\right).$$

For example, the effects 110 of the interaction between the fixed object 102 and the freely moving mass 104 can be predicted or inferred 112 using a relation-centric function that takes as input the states and attributes 108 of the objects 102, 104, e.g., the spring constant of the spring 106. As shown in FIG. 1, the example process may be used to predict that a freely moving mass 104 attached to a fixed object 102 via a stretched spring 106 at time *t* will move towards the fixed object 102, thus contracting the spring 106, at a subsequent time step *t+1.*

The above described formulation can be expanded to larger and more complex systems, e.g., systems including multiple interacting objects, by representing them as a graph, *G =< O,R >*, where the nodes, *O,* correspond to the objects, and the edges, *R,* to the relations between the objects. The graph, *G,* may be an attributed, directed multigraph, i.e., a graph that may include parallel edges. In some implementations there may be multiple distinct relations between two objects, e.g., rigid and magnetic interactions. These multiple relations can be expressed as parallel edges between two nodes. For a system with $N_O$ objects and $N_R$ relations, the inputs to the interaction network may be given by

$$O = \{o_j\}_{j=1,\ldots,N_O},\ R = \{< i,j,r_k >_k\}_{k=1,\ldots,N_R}\ where\ i \neq j, 1 \leq i,j \leq N_O, X = \{x_j\}_{j=1,\ldots,N_O}$$

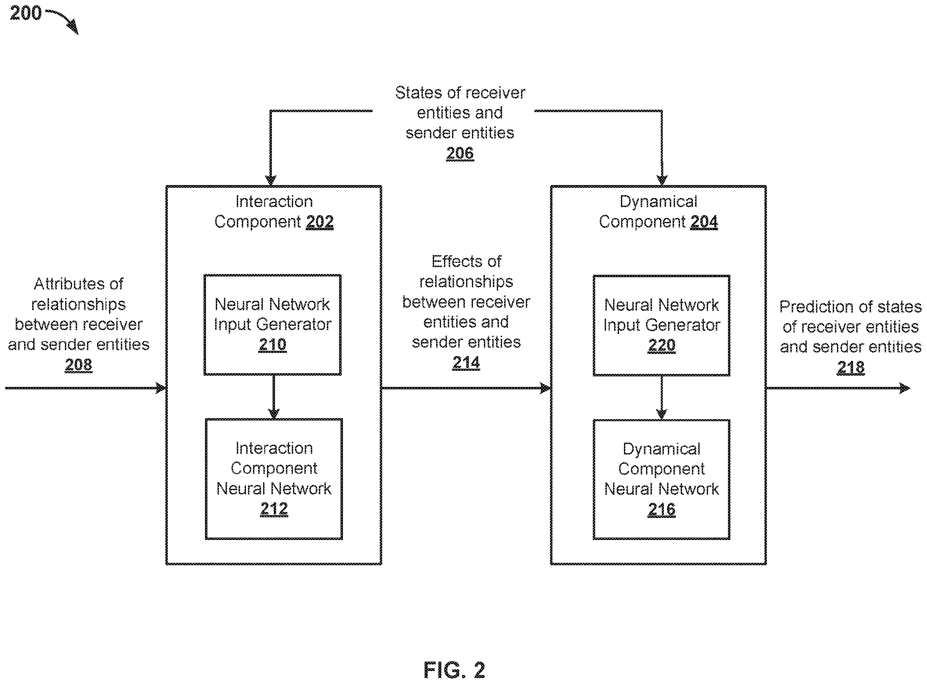

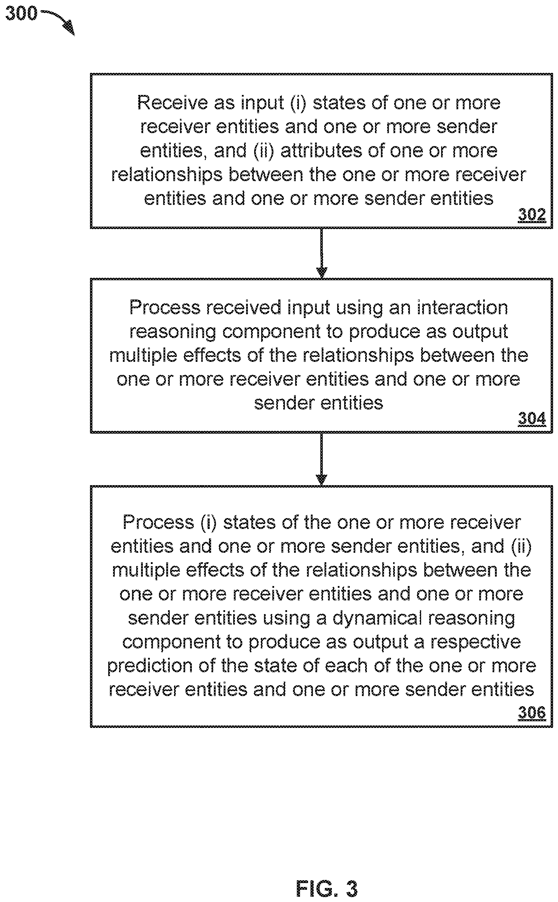

where *O* represents the states of each object, the triplet, $< i, j, r_k >_k$, represents the *k*-th relation in the system, from sender, $o_i$, to receiver, *oj* , with relation attribute, $r_k$, and *X* represents external effects, such as active control inputs or gravitational acceleration. External effects are defined as not being part of the system, and are applied to each object separately. An example interaction network is described in more detail below with reference to FIGS. 2 and 3.

FIG. 2 is a block diagram of an example interaction network 200. The interaction network 200 is an example of a system implemented as computer programs on one or more computers in one or more locations, in which the systems, components, and techniques described below can be implemented.

The interaction network 200 is a system that is used to dynamically predict how entities, in particular elements of a physical system, in systems interact and infer properties of the system. The interaction network 200 includes an interaction component 202 and a dynamical component 204. The interaction component 202 includes an interaction component neural network 212, e.g., a first multilayer perceptron (MLP). The dynamical component 204 includes a dynamical component neural network 216, e.g., a second MLP.

The interaction component 202 is configured to receive as input data 206 representing states of one or more receiver entities and one or more sender entities. A receiver entity is an entity that is affected by one or more sender entities through one or more respective relationships. Relationships between entities comprise collisions between elements of a physical system. For example, as described above with reference to FIG. 1, a receiver entity may include a freely moving mass and a sender entity may include a fixed object that is attached to the freely moving mass via a spring.

The interaction component 202 is further configured to receive as input data 208 representing attributes of one or more relationships between the one or more receiver entities and one or more sender entities. For example, as described above with reference to FIG. 1, an attribute of a relationship between a freely moving mass and a fixed object that are connected by a spring may include a value of the spring constant.

In some implementations the received input data 206, 208 may be represented as an attributed directed multigraph *G.* For example, the interaction network 200 may be configured to receive input data 206, 208 representing an attributed directed multigraph *G.* For example, the input data 206, 208 may include a data structure that represents a graph, e.g., an adjacency list or adjacency matrix. Alternatively, the interaction network 200 may be configured to receive input data 206, 208 and to process the received input data to generate a corresponding attributed directed multigraph *G,* e.g., to generate a data structure that represents a graph. The multigraph *G* may include multiple nodes that represent respective entities and one or more edges representing relationships between the entities. The edges may be directed edges that indicate an influence of one entity on another.

The interaction component 202 is configured to process the received inputs 206, 208 to produce as output data 214 representing effects of the relationships between the one or more receiver entities and one or more sender entities. For example, as illustrated above with reference to FIG. 1, data representing an effect of the taut spring 106 connecting the fixed object 102 and freely moving mass 106 may include data indicating that the taut spring will contract.

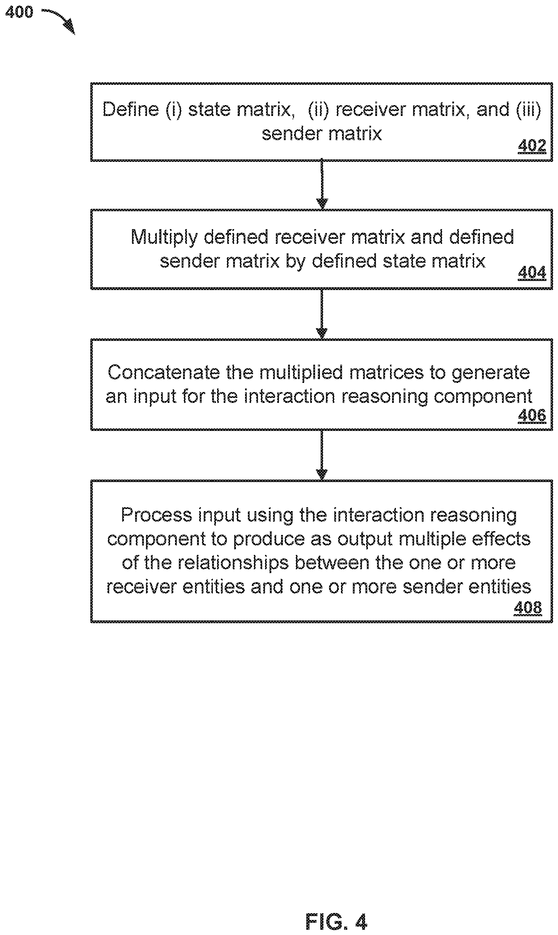

In some implementations the interaction component 202 may be configured to process the received inputs 206, 208 to generate an input for the interaction component neural network 212, e.g., using neural network input generator 210. The interaction component neural network 212 may then process the generated neural network input to generate, as output, the data 214 representing effects of the relationships between the one or more receiver entities and one or more sender entities. Processing interaction network input data to generate an input for a neural network included in an interaction component is described in more detail below with reference to FIGS. 3 and 4.

The interaction component neural network 212 may be a neural network that has been trained on suitable training data to predict effects of relationships between receiver entities and sender entities. For example, the training data may include example pairs of (i) relationships between receiver entities and sender entities, e.g., represented by a matrix, and (ii) known effects of the relationships. In some implementations the interaction component neural network 212 and the dynamical component neural network 216 may be trained end to end using a gradient based optimization technique, e.g., stochastic gradient descent.

The dynamical component 204 is configured to receive as input data 214 representing effects of the relationships between the one or more receiver entities and one or more sender entities, and input data 206 representing states of one or more receiver entities and one or more sender entities. The dynamical component 204 is configured to process the received input data 214 to generate as output data 218 representing respective predictions of the states of the one or more receiver entities and one or more sender entities. For example, as illustrated above with reference to FIG. 1, data representing a prediction of the states of the freely moving mass 104 and fixed object 102 may include data indicating that the freely moving mass 104 will move towards the fixed object 102, contracting the spring 106.

In some implementations the dynamical component 204 may be configured to process the received inputs 206, 214 to generate an input for the dynamical component neural network 216, e.g., using neural network input generator 220. The dynamical component neural network 216 may then process the generated neural network input to generate, as output, the data 218 representing respective predictions of the states of the one or more receiver entities and one or more sender entities. Processing dynamical component input data to generate an input for a neural network included in the dynamical component is described in more detail below with reference to FIGS. 3 and 4.

The dynamical component neural network 216 may be a neural network that has been trained on suitable training data to predict future states of receiver and sender entities. For example, the training data may include example pairs of (i) current entity states and effects of their interactions, e.g., represented by a matrix, and (ii) known future states. In some implementations the interaction component neural network 212 and dynamical component neural network 216 may be trained end to end using a gradient based optimization technique, e.g., stochastic gradient descent. In some implementations the dynamical component neural network 216 and interaction component neural network 212 are trained independently.

The interaction network 200 may be applied to a variety of settings. The interaction network 200 provides a learnable physics engine that is used to simulate rigid body dynamics including collision detection.

In some implementations the interaction network 200 may include, or be in data communication with, an analyzing component that is configured to analyze data representing predictions of the states of the one or more receiver entities and one or more sender entities, e.g., output data 218. For example, the interaction network 200 may include an additional neural network, e.g., a MLP, that is configured to receive as input data representing predictions of the states of receiver entities and sender entities. The additional neural network may be configured to process the received input to generate as output data representing inferred properties about the system of entities. For example, the output data 218 may be analyzed to determine or predict global properties of the one or more receiver entities and one or more sender entities, e.g., a potential energy of a physical system.

In some implementations the analyzing component may be configured to preprocess data $P$ representing predictions of the states of the one or more receiver entities and one or more sender entities before the data is provided to the additional neural network. For example, the analyzing component may be configured to apply an aggregation function g to the data $P$. The aggregation function g may perform an elementwise summation across the columns of the matrix $P$ to return a $D_p$ length vector $\tilde{P}$. The vector $\tilde{P}$ may then be provided to the additional neural network as input.

FIG. 3 is a flow diagram of an example process 300 for simulating a physical system. For convenience, the process 300 will be described as being performed by a system of one or more computers located in one or more locations. For example, an interaction network, e.g., the interaction network 200 of FIG. 2, can perform the process 300.

The system receives an input including (i) states of one or more receiver entities and one or more sender entities, and (ii) attributes of one or more relationships between the one or more receiver entities and one or more sender entities step (302). In some implementations a receiver entity includes an entity that is affected by one or more sender entities through one or more respective relationships. A relational attribute of a relationship between a receiver entity and a sender entity describes the relationships between the receiver entity and sender entity. The entities comprise elements of a physical system, in particular moving or stationary objects. Relationships between entities include collisions between elements of a physical system.

For example, in some implementations the one or more relationships between the one or more receiver entities and one or more sender entities may include binary interactions between a receiver entity and a sender entity, where each binary interaction is represented by a 3-tuple including (i) an index of a respective receiver entity, (ii) an index of a respective sender entity, and (iii) a vector containing relational attributes of the respective receiver entity and respective sender entity. As another example, the one or more relationships between the one or more receiver entities and one or more sender entities may include high-order interactions, where each high-order interaction is represented by a $(2m-1)$-tuple, where $m$ represents the order of the interaction. For example, in some cases two sender entities may affect a same receiver entity through two respective interactions. This may be described as a higher-order interaction, e.g., an interaction of the order 3, and may be represented by a 5-tuple including (i) an index of the receiver entity, (ii) an index of the first sender entity, (iii) an index of the second sender entity, (iv) a vector containing relational attributes of the receiver entity and the first sender entity, and (v) a vector containing relational attributes of the receiver entity and the second sender entity.

6

The states of the one or more receiver entities and one or more sender entities and relational attributes of the one or more relationships between the one or more receiver entities and one or more sender entities may be represented as an attributed directed multigraph including multiple nodes for each entity and one or more directed edges for each relationships indicating an influence of one entity on another. By representing the states of the one or more receiver entities and one or more sender entities and the relational attributes of the one or more relationships between the one or more receiver entities and one or more sender entities, the system is able to take advantage of structured approaches, such as handling variable numbers of entities in arbitrary order and transferring what has been learned to novel tasks.

The system processes the received input to produce as output multiple effects of the relationships between the one or more receiver entities and one or more sender entities (step 304). In some implementations the number of output multiple effects of the relationships between the one or more receiver entities and one or more sender entities is equal to the number of input relationships between the one or more receiver entities and one or more sender entities. Determining multiple effects of relationships between one or more receiver entities and one or more sender entities is described in more detail with reference to FIG. 4 below.

The system processes (i) the states of the one or more receiver entities and one or more sender entities, and (ii) the multiple effects of the relationships between the one or more receiver entities and one or more sender entities to produce as output a respective prediction of the state of each of the one or more receiver entities and one or more sender entities (step 306). In some implementations processing the received input may include aggregating the received multiple effects of the relationships between the one or more receiver entities and one or more sender entities using one or more commutative and associative operations, where the one or more commutative and associative operations may include element-wise summations.

For example, the system may apply an aggregation function $a$ to data $G$ representing the objects and relationships, data $X$ representing external effects applied to each of the objects, and data $E$ representing the multiple effects of the relationships between the objects. The aggregation function a may compute a matrix product $\tilde{E} = E R_r^T$, whose $j$-th column is equivalent to an elementwise summation across all effects whose corresponding relation has receiver object $j$. The aggregation function $a$ may then concatenate $\tilde{E}$ with data representing the objects O and X:

$$a(G, X, E) = [O; X; \tilde{E}] = C$$

where $C$ is a matrix whose columns represent object states, external effects and per-object aggregate interaction effects.

The generated matrix C may be processed by a dynamical component, as described above with reference to FIG. 1, to generate an output matrix $P$ representing predictions of the states of each of the one or more receiver entities and one or more sender entities. For example, the system may apply a MLP to each of the columns of C to generate respective vectors $p_j$ of length $D_p$. The vectors $p_j$ may be concatenated to produce the matrix $P$.

The produced respective prediction of the state of each of the one or more receiver entities and one or more sender entities includes multiple entity states corresponding to subsequent receiver entity states and subsequent sender entity states.

In some implementations the system may further analyze the produced respective prediction of the state of each of the one or more receiver entities and one or more sender entities to predict global properties of the one or more receiver entities and one or more sender entities. For example, the system may use an aggregation function g to perform an elementwise summation across the columns of the matrix $P$ to return a $D_p$ length vector $\tilde{P}$. The vector $\tilde{P}$ may be further processed by an MLP which generates as output a $D_a$ length vector $q$ that represents a global property of the system of objects or entities.

FIG. 4 is a flow diagram of an example process 400 processing an input representing a system of objects and relations to determine effects of relationships between the objects. For convenience, the process 400 will be described as being performed by a system of one or more computers located in one or more locations. For example, an interaction network, e.g., the interaction network 200 of FIG. 2, can perform the process 400.

The system defines (i) a state matrix, (ii) a receiver matrix, and (iii) a sender matrix (step 402). The state matrix $O$ is defined as a $D_s \times N_O$ matrix where No represents the total number of objects. Each column of the state matrix $O$ corresponds to a respective object's state vector of length $D_s$.

The receiver matrix $R_r$ is defined as a $N_O \times N_R$ matrix, where $N_R$ represents the total number of relationships between the objects. In some implementations the receiver matrix may be a binary matrix, i.e., a matrix whose entries are either 0 or 1. In these implementations, each column of the receiver matrix $R_r$ may contain zero entries except for the position of an object that is a receiver of the corresponding relationships. As an example, in the case where the system of objects and relations includes three objects $o_1$, $o_2$ and $o_3$, with $o_1$ and $o_3$ influencing or interacting with $o_2$, an example receiver matrix may be given by

$$R_r = \begin{pmatrix} 0 & 0 \\ 1 & 1 \\ 0 & 0 \end{pmatrix}.$$

The sender matrix $R_s$ is defined as a $N_O \times N_R$ matrix. In some implementations the sender matrix may be a binary matrix. In these implementations, each column of the sender matrix $R_s$ contains zero entries except for the position of an object that is a sender of the corresponding relationships. Continuing the example above, an example sender matrix may be given by

$$R_s = \begin{pmatrix} 1 & 0 \\ 0 & 0 \\ 0 & 1 \end{pmatrix}.$$

The system may further define an attribute matrix $R_a$. The attribute matrix $R_a$ is defined as a $D_R \times N_R$ matrix. Each column of the attribute matrix corresponds to a relation between the objects and represents the respective relation's attributes via a $D_R$ length vector.

The system multiplies the defined receiver matrix and the defined sender matrix by the defined state matrix (step 404). In some implementations the system multiplies the receiver matrix with the state matrix and the sender matrix with the state matrix using a marshalling function m that is configured to compute the matrix products $OR_r$ and $OR_s$

The system concatenates the multiplied matrices $OR_r$ and $OR_s$ to generate an input $B$ for the interaction component (step 406). In some implementations the system may further concatenate the matrices $OR_r$ and $OR_s$ with the attribute matrix $R_a$. For example, the marshalling function $m$ described above with reference to step 404 may multiply the defined receiver and sender matrices by the defined state matrix and further concatenate the multiplied matrices with the attribute matrix, e.g., $m(G) = [OR_r; OR_s; R_a] = B$. The generated input $B$ is a $(2D_S+D_R) \times N_D$ matrix, whose columns represent interaction terms for the $N_R$ relations.

The system processes the input using the interaction component to produce as output multiple effects of the relationships between the one or more receiver entities and one or more sender entities. The produced output may include a $D_E \times N_R$ matrix $E$. For example, the input $B$ may be provided to an interaction component, as described above with reference to FIG. 1, that applies a MLP to each column of the input matrix $B$. The output of the MLP is a $D_E$ length vector representing a distributed representation of the effects of the relationships between the receiver entities and sender entities. The $N_R$ effects can be concatenates to form the effect matrix $E$. In some implementations the number of output multiple effects of the relationships between the one or more receiver entities and one or more sender entities may be equal to the number of input relationships between the one or more receiver entities and one or more sender entities.

The multiple effects, e.g., effect matrix $E$, may be processed together with the states of the one or more receiver entities and one or more sender entities to generate a respective prediction of the future state of each of the one or more receiver entities and one or more sender entities, as described above with reference to step 306 of FIG. 3.

Embodiments of the subject matter and the functional operations described in this specification can be implemented in digital electronic circuitry, in tangibly-embodied computer software or firmware, in computer hardware, including the structures disclosed in this specification and their structural equivalents, or in combinations of one or more of them.

Embodiments of the subject matter described in this specification can be implemented as one or more computer programs, i.e., one or more modules of computer program instructions encoded on a tangible non transitory program carrier for execution by, or to control the operation of, data processing apparatus. Alternatively or in addition, the program instructions can be encoded on an artificially generated propagated signal, e.g., a machine-generated electrical, optical, or electromagnetic signal, that is generated to encode information for transmission to suitable receiver apparatus for execution by a data processing apparatus. The computer storage medium can be a machine-readable storage device, a machine-readable storage substrate, a random or serial access memory device, or a combination of one or more of them. The computer storage medium is not, however, a propagated signal.

The term "data processing apparatus" encompasses all kinds of apparatus, devices, and machines for processing data, including by way of example a programmable processor, a computer, or multiple processors or computers. The apparatus can include special purpose logic circuitry, e.g., an FPGA (field programmable gate array) or an ASIC (application specific integrated circuit). The apparatus can also include, in addition to hardware, code that creates an execution environment for the computer program in question, e.g., code that constitutes processor firmware, a protocol stack, a database management system, an operating system, or a combination of one or more of them.

A computer program (which may also be referred to or described as a program, software, a software application, a module, a software module, a script, or code) can be written in any form of programming language, including compiled or interpreted languages, or declarative or procedural languages, and it can be deployed in any form, including as a stand alone program or as a module, component, subroutine, or other unit suitable for use in a computing environment. A computer program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub programs, or portions of code. A computer program can be deployed to be executed on one computer or on multiple computers that are located at one site or distributed across multiple sites and interconnected by a communication network.

As used in this specification, an "engine," or "software engine," refers to a software implemented input/output system that provides an output that is different from the input. An engine can be an encoded block of functionality, such as a library, a platform, a software development kit ("SDK"), or an object. Each engine can be implemented on any appropriate type of computing device, e.g., servers, mobile phones, tablet computers, notebook computers, music players, e-book readers, laptop or desktop computers, PDAs, smart phones, or other stationary or portable devices, that includes one or more processors and computer readable media. Additionally, two or more of the engines may be implemented on the same computing device, or on different computing devices.

The processes and logic flows described in this specification can be performed by one or more programmable computers executing one or more computer programs to perform functions by operating on input data and generating output. The processes and logic flows can also be performed by, and apparatus can also be implemented as, special purpose logic circuitry, e.g., an FPGA (field programmable gate array) or an ASIC (application specific integrated circuit).

Computers suitable for the execution of a computer program include, by way of example, can be based on general or special purpose microprocessors or both, or any other kind of central processing unit. Generally, a central processing unit will receive instructions and data from a read only memory or a random access memory or both. The essential elements of a computer are a central processing unit for performing or executing instructions and one or more memory devices for storing instructions and data. Generally, a computer will also include, or be operatively coupled to receive data from or transfer data to, or both, one or more mass storage devices for storing data, e.g., magnetic, magneto optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

Computer readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks. The processor and the memory can be supplemented by, or incorporated in, special purpose logic circuitry.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

Embodiments of the subject matter described in this specification can be implemented in a computing system that includes a back end component, e.g., as a data server, or that includes a middleware component, e.g., an application server, or that includes a front end component, e.g., a client computer having a graphical user interface or a Web browser through which a user can interact with an implementation of the subject matter described in this specification, or any combination of one or more such back end, middleware, or front end components. The components of the system can be interconnected by any form or medium of digital data communication, e.g., a communication network. Examples of communication networks include a local area network ("LAN") and a wide area network ("WAN"), e.g., the Internet.

The computing system can include clients and servers. A client and server are generally remote from each other and typically interact through a communication network. The relationship of client and server arises by virtue of computer programs running on the respective computers and having a client-server relationship to each other.

While this specification contains many specific implementation details, these should not be construed as limitations on the scope of any invention or of what may be claimed, but rather as descriptions of features that may be specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims. For example, the actions recited in the claims can be performed in a different order and still achieve desirable results. As one example, the processes depicted in the accompanying figures do not necessarily require the particular order shown, or sequential order, to achieve desirable results. In certain implementations, multitasking and parallel processing may be advantageous.

**Claims**

1. An interaction neural network system implemented by one or more computers for analyzing current states and predicting future states of interacting real-world objects, wherein the interaction neural network system includes multiple neural networks that are trained to receive data representing current states of the objects at time t, together with data representing their interactions and to process the received data to generate as output data representing predicted subsequent states of the objects at time t+1 that are predicted consequences of the interactions between the objects; wherein, the system comprising:

   an interaction component comprising an interaction component neural network (212) configured to:

      receive as input (i) states (206) of one or more receiver entities and one or more sender entities, and (ii) attributes (208) of one or more relationships between the one or more receiver entities and one or more sender entities, wherein the one or more receiver entities and the one or more sender entities are moving or stationary objects; and
      process the received input to produce as output multiple effects of the relationships between the one or more receiver entities and one or more sender entities;

   a dynamical component comprising a dynamical component neural network configured to:

      receive as input (i) the states of the one or more receiver entities and one or more sender entities, and (ii) the multiple effects of the relationships between the one or more receiver entities and one or more sender entities; and
      process the received input to produce as output a respective prediction of a subsequent state of each of the one or more receiver entities and one or more sender entities; wherein outputting the respective prediction of the subsequent state of each of the one or more receiver entities and one or more sender entities comprises outputting a prediction of the dynamics of the one or more receiver entities and one or more sender entities, so as to detect a collision between the objects based on rigid body dynamics.

2. The system of claim 1, wherein a receiver entity comprises an entity that is affected by one or more sender entities through one or more respective relationships and/or
   wherein a relational attribute of a relationship between a receiver entity and a sender entity describes the relationships between the receiver entity and sender entity.

3. The system of claim 1 or 2, wherein the (i) states of the one or more receiver entities and one or more sender entities, and (ii) relational attributes of the one or more relationships between the one or more receiver entities and one or more sender entities are represented as an attributed directed multigraph comprising multiple nodes for each entity and one or more directed edges for each relationships indicating an influence of one entity on another.

4. The system of any one of the preceding claims, wherein the one or more relationships between the one or more receiver entities and one or more sender entities comprise binary interactions between a receiver entity and a sender entity, and

wherein each binary interaction is represented by a 3-tuple comprising (i) an index of a respective receiver entity, (ii) an index of a respective sender entity, and (iii) a vector containing relational attributes of the respective receiver entity and respective sender entity and/or
wherein the one or more relationships between the one or more receiver entities and one or more sender entities comprise high-order interactions, and
wherein each high-order interaction is represented by a (2m-1)-tuple, where m represents the order of the interaction.

5. The system of any one of the preceding claims, wherein the interaction component neural network comprises a first multilayer perceptron (MLP) and the dynamical component neural network comprises a second MLP.

6. The system of claim 5, wherein processing the received input to produce as output multiple effects of the relationships between the one or more receiver entities and one or more sender entities comprises:

defining (i) a state matrix as a matrix whose i-th column represents a state of entity i, (ii) a receiver matrix as a NO×NR matrix, where NO represents the total number of entities and NR represents the total number of relationships, and wherein each column of the receiver matrix contains zero entries except for the position of an entity that is a receiver of the corresponding relationships, and (iii) a sender matrix as a NO×NR matrix, wherein each column of the sender matrix contains zero entries except for the position of an entity that is a sender of the corresponding relationships;
multiplying the defined receiver matrix and the defined sender matrix by the defined state matrix;
concatenating the multiplied matrices to generate an input for the first MLP;
processing the input using the first MLP to produce as output multiple effects of the relationships between the one or more receiver entities and one or more sender entities, wherein the produced output comprises an effect matrix whose columns represent the multiple effects of the relationships between the one or more receiver entities and the one or more sender entities.

7. The system of claim 6, wherein the relationships between the one or more receiver entities and one or more sender entities comprise relationships of different types, and wherein concatenating the multiplied matrices further comprises concatenating the multiplied matrices and a matrix representing the relationships of different types to generate an input for the second MLP; or
wherein processing the received input to produce as output a respective prediction of the state of each of the one or more receiver entities and one or more sender entities comprises:

multiplying the effect matrix with a transpose of the defined receiver matrix;
concatenating the multiplied effect matrix with the transpose of the defined receiver matrix with the defined state matrix to generate an input for the second MLP;
processing the input using the second MLP to produce as output a respective prediction of a subsequent state of each of the one or more receiver entities and one or more sender entities.

8. The system of claim 6 or 7, wherein during a system training process the sender and receiver matrices are constant.

9. The system of any one of the preceding claims, wherein the number of output multiple effects of the relationships between the one or more receiver entities and one or more sender entities is equal to the number of input relationships between the one or more receiver entities and one or more sender entities.

10. The system of any one of the preceding claims, wherein processing the received input to produce as output a respective prediction of a subsequent state of each of the one or more receiver entities and one or more sender entities comprises aggregating the received multiple effects of the relationships between the one or more receiver entities and one or more sender entities using one or more commutative and associative operations, wherein the one or more commutative and associative operations optionally comprise element-wise summations.

11. The system of any one of the preceding claims, wherein the produced respective prediction of the subsequent state of each of the one or more receiver entities and one or more sender entities comprises multiple entity states corresponding to subsequent receiver entity states and subsequent sender entity states and/or
wherein the system is further configured to analyze the produced respective prediction of the subsequent state of each of the one or more receiver entities and one or more sender entities to predict global properties of the one or more receiver entities and one or more sender entities.

12. The system of any one of the preceding claims, wherein the interaction component utilizes a first function approximator to model relationships between entities, and
wherein the dynamical component utilizes a second function approximator to model the state of the environment in which the entities reside.

13. The system of any one of the preceding claims, wherein the interaction component and dynamical component are trained independently and/or
wherein the interaction component and dynamical component are trained end to end using a gradient based optimization technique.

14. A method implemented by an interaction neural network system implemented by one or more computers for analyzing current states and predicting future states of interacting real-world objects, wherein the interaction neural network system includes multiple neural networks that are trained to receive data representing current states of the objects at time t, together with data representing their interactions and to process the received data to generate as output data representing predicted subsequent states of the objects at time t+1 that are predicted consequences of the interactions between the objects, the method comprising:

receiving, by an interaction component neural network (212), an input comprising (i) states of one or more receiver entities and one or more sender entities, and (ii) attributes of one or more relationships between the one or more receiver entities and one or more sender entities, wherein the one or more receiver entities and the one or more sender entities are moving or stationary objects;
processing the received input using the interaction component neural network to produce as output multiple effects of the relationships between the one or more receiver entities and one or more sender entities; and
processing (i) the states of the one or more receiver entities and one or more sender entities, and (ii) the multiple effects of the relationships between the one or more receiver entities and one or more sender entities using a dynamical component comprising a dynamical component neural network to produce as output a respective prediction of a subsequent state of each of the one or more receiver entities and one or more sender entities;
wherein outputting the respective prediction of the subsequent state of each of the one or more receiver entities and one or more sender entities comprises outputting a prediction of the dynamics of the one or more receiver entities and one or more sender entities, so as to detect a collision between the objects based on rigid body dynamics.

15. A computer storage medium encoded with instructions that, when executed by one or more computers, cause the one or more computers to perform a method according to claim 14.

**Patentansprüche**

1. Neuronales Interaktionsnetzwerksystem, das von einem oder mehreren Computern implementiert wird, um aktuelle Zustände zu analysieren und zukünftige Zustände von interagierenden realen Objekten vorherzusagen, wobei das neuronale Interaktionsnetzwerksystem mehrere neuronale Netzwerke einschließt, die trainiert werden, um Daten zu empfangen, die aktuelle Zustände der Objekte zu einem Zeitpunkt t darstellen, zusammen mit Daten, die ihre Interaktionen darstellen, und um die empfangenen Daten zu verarbeiten, um als Ausgabe Daten zu erzeugen, die vorhergesagte nachfolgende Zustände der Objekte zu einem Zeitpunkt t+1 darstellen, die vorhergesagte Folgen der Interaktionen zwischen den Objekten sind; wobei das System Folgendes umfasst:

eine Interaktionskomponente, die ein neuronales Interaktionskomponenten-Netzwerk (212) umfasst, das konfiguriert ist zum:

Empfangen, als Eingabe (i), von Zuständen (206) einer oder mehrerer Empfängereinheiten und einer oder mehrerer Sendereinheiten, und (ii) von Attributen (208) einer oder mehrerer Beziehungen zwischen der einen oder den mehreren Empfängereinheiten und der einen oder den mehreren Sendereinheiten, wobei die eine oder die mehreren Empfängereinheiten und die eine oder die mehreren Sendereinheiten bewegliche oder stationäre Objekte sind; und
Verarbeiten der empfangenen Eingabe, um als Ausgabe mehrere Effekte der Beziehungen zwischen der einen oder den mehreren Empfängereinheiten und der einen oder den mehreren Sendereinheiten zu erzeugen;

eine dynamische Komponente, die ein dynamisches neuronales Komponenten-Netzwerk umfasst, das konfiguriert ist zum:

Empfangen, als Eingabe (i), der Zustände der einen oder mehreren Empfängereinheiten und der einen oder mehreren Sendereinheiten, und (ii) der mehreren Effekte der Beziehungen zwischen der einen oder den mehreren Empfängereinheiten und der einen oder den mehreren Sendereinheiten; und

Verarbeiten der empfangenen Eingabe, um als Ausgabe eine jeweilige Vorhersage eines nachfolgenden Zustands jeder der einen oder mehreren Empfängereinheiten und der einen oder mehreren Sendereinheiten zu erzeugen; wobei das Ausgeben der jeweiligen Vorhersage des nachfolgenden Zustands jeder der einen oder mehreren Empfängereinheiten und der einen oder mehreren Sendereinheiten das Ausgeben einer Vorhersage der Dynamik der einen oder mehreren Empfängereinheiten und der einen oder mehreren Sendereinheiten umfasst, um eine Kollision zwischen den Objekten auf der Grundlage der Starrkörperdynamik zu erkennen.

2. System nach Anspruch 1, wobei eine Empfängereinheit eine Einheit umfasst, die von einer oder mehreren Sendereinheiten durch eine oder mehrere entsprechende Beziehungen beeinflusst wird und/oder wobei ein relationales Attribut einer Beziehung zwischen einer Empfängereinheit und einer Sendereinheit die Beziehungen zwischen der Empfängereinheit und der Sendereinheit beschreibt.

3. System nach Anspruch 1 oder 2, wobei die (i) Zustände der einen oder mehreren Empfängereinheiten und der einen oder mehreren Sendereinheiten, und (ii) die relationalen Attribute der einen oder mehreren Beziehungen zwischen der einen oder den mehreren Empfängereinheiten und der einen oder den mehreren Sendereinheiten als ein attributierter gerichteter Multigraph dargestellt werden, der mehrere Knoten für jede Einheit und eine oder mehrere gerichtete Kanten für jede Beziehung umfasst, die einen Einfluss einer Einheit auf eine andere anzeigt.

4. System nach einem der vorhergehenden Ansprüche, wobei die eine oder die mehreren Beziehungen zwischen der einen oder den mehreren Empfängereinheiten und der einen oder den mehreren Sendereinheiten binäre Interaktionen zwischen einer Empfängereinheit und einer Sendereinheit umfassen, und

wobei jede binäre Interaktion durch ein 3-Tupel dargestellt wird, das (i) einen Index einer jeweiligen Empfängereinheit, (ii) einen Index einer jeweiligen Sendereinheit und (iii) einen Vektor, der Beziehungsattribute der jeweiligen Empfängereinheit und der jeweiligen Sendereinheit enthält, umfasst, und/oder wobei die eine oder die mehreren Beziehungen zwischen der einen oder den mehreren Empfängereinheiten und der einen oder den mehreren Sendereinheiten Interaktionen höherer Ordnung umfassen, und wobei jede Interaktion höherer Ordnung durch ein (2m-1)-Tupel dargestellt wird, wobei m die Ordnung der Interaktion darstellt.

5. System nach einem der vorhergehenden Ansprüche,
wobei das neuronale Interaktionskomponenten-Netzwerk ein erstes mehrschichtiges Perzeptron (MLP) und das neuronale Netzwerk der dynamischen Komponente ein zweites MLP umfasst.

6. System nach Anspruch 5, wobei die Verarbeitung der empfangenen Eingabe, um als Ausgabe mehrere Effekte der Beziehungen zwischen der einen oder den mehreren Empfängereinheiten und der einen oder den mehreren Sendereinheiten zu erzeugen, Folgendes umfasst:

Definieren (i) einer Zustandsmatrix als eine Matrix, deren i-te Spalte einen Zustand der Einheit i darstellt, (ii) einer Empfängermatrix als eine NOxNR-Matrix, wobei NO die Gesamtzahl der Einheiten und NR die Gesamtzahl der Beziehungen darstellt, und wobei jede Spalte der Empfängermatrix Null-Einträge enthält, außer bei der Position einer Einheit, die ein Empfänger der entsprechenden Beziehungen ist, und (iii) einer Sendermatrix als eine NOxNR-Matrix, wobei jede Spalte der Sendermatrix Null-Einträge enthält, außer bei der Position einer Einheit, die ein Sender der entsprechenden Beziehungen ist;
Multiplizieren der definierten Empfängermatrix und der definierten Sendermatrix mit der definierten Zustandsmatrix;
Verketten der multiplizierten Matrizen, um eine Eingabe für das erste MLP zu erzeugen;
Verarbeiten der Eingabe unter Verwendung des ersten MLP, um als Ausgabe mehrere Effekte der Beziehungen zwischen der einen oder den mehreren Empfängereinheiten und der einen oder den mehreren Sendereinheiten zu erzeugen, wobei die erzeugte Ausgabe eine Effektmatrix umfasst, deren Spalten die mehreren Effekte der Beziehungen zwischen der einen oder den mehreren Empfängereinheiten und der einen oder den mehreren Sendereinheiten darstellen.

**7.** System nach Anspruch 6, wobei die Beziehungen zwischen der einen oder den mehreren Empfängereinheiten und der einen oder den mehreren Sendereinheiten Beziehungen unterschiedlichen Typs umfassen, und wobei das Verketten der multiplizierten Matrizen ferner das Verketten der multiplizierten Matrizen und einer Matrix umfasst, welche die Beziehungen unterschiedlichen Typs darstellt, um eine Eingabe für das zweite MLP zu erzeugen; oder wobei das Verarbeiten der empfangenen Eingabe, um als Ausgabe eine jeweilige Vorhersage des Zustands jeder der einen oder mehreren Empfängereinheiten und der einen oder mehreren Sendereinheiten zu erzeugen, Folgendes umfasst:

Multiplizieren der Effektmatrix mit einer Transposition der definierten Empfängermatrix;
Verketten der multiplizierten Effektmatrix mit der Transposition der definierten Empfängermatrix mit der definierten Zustandsmatrix, um eine Eingabe für das zweite MLP zu erzeugen;
Verarbeiten der Eingabe unter Verwendung des zweiten MLP, um als Ausgabe eine jeweilige Vorhersage eines nachfolgenden Zustands einer jeden der einen oder mehreren Empfängereinheiten und der einen oder mehreren Sendereinheiten zu erzeugen.

**8.** System nach Anspruch 6 oder 7, wobei während eines Systemtrainingsverfahrens die Sender- und Empfängermatrizen konstant sind.

**9.** System nach einem der vorhergehenden Ansprüche, wobei die Anzahl der mehreren Ausgabeeffekte der Beziehungen zwischen der einen oder den mehreren Empfängereinheiten und der einen oder den mehreren Sendereinheiten gleich der Anzahl der Eingabebeziehungen zwischen der einen oder den mehreren Empfängereinheiten und der einen oder den mehreren Sendereinheiten ist.

**10.** System nach einem der vorhergehenden Ansprüche, wobei die Verarbeitung der empfangenen Eingabe, um als Ausgabe eine jeweilige Vorhersage eines nachfolgenden Zustands jeder der einen oder mehreren Empfängereinheiten und der einen oder mehreren Sendereinheiten zu erzeugen, das Aggregieren der empfangenen mehreren Effekte der Beziehungen zwischen der einen oder den mehreren Empfängereinheiten und der einen oder den mehreren Sendereinheiten unter Verwendung einer oder mehrerer kommutativer und assoziativer Operationen umfasst, wobei die eine oder mehreren kommutativen und assoziativer Operationen wahlweise elementweise Summationen umfassen.

**11.** System nach einem der vorhergehenden Ansprüche, wobei die erzeugte jeweilige Vorhersage des nachfolgenden Zustands jeder der einen oder mehreren Empfängereinheiten und der einen oder mehreren Sendereinheiten mehrere Entitätszustände umfasst, die nachfolgenden Zuständen der Empfängereinheiten und nachfolgenden Zuständen der Sendereinheiten entsprechen, und/oder
wobei das System ferner konfiguriert ist, um die erzeugte jeweilige Vorhersage des nachfolgenden Zustands jeder der einen oder mehreren Empfängereinheiten und der einen oder mehreren Sendereinheiten zu analysieren, um globale Eigenschaften der einen oder mehreren Empfängereinheiten und der einen oder mehreren Sendereinheiten vorherzusagen.

**12.** System nach einem der vorhergehenden Ansprüche, wobei die Interaktionskomponente einen ersten Funktionsapproximator verwendet, um Beziehungen zwischen Einheiten zu modellieren, und
wobei die dynamische Komponente einen zweiten Funktionsapproximator verwendet, um den Zustand der Umgebung, in der sich die Einheiten befinden, zu modellieren.

**13.** System nach einem der vorhergehenden Ansprüche, wobei die Interaktionskomponente und die dynamische Komponente unabhängig voneinander trainiert werden und/oder
wobei die Interaktionskomponente und die dynamische Komponente unter Verwendung eines gradientenbasierten Optimierungsverfahrens Ende-zu-Ende trainiert werden.

**14.** Verfahren, das durch ein neuronales Interaktionsnetzwerksystem implementiert wird, das durch einen oder mehrere Computer implementiert wird, um aktuelle Zustände zu analysieren und zukünftige Zustände von interagierenden Objekten der realen Welt vorherzusagen, wobei das neuronale Interaktionsnetzwerksystem mehrere neuronale Netzwerke einschließt, die trainiert werden, um Daten zu empfangen, die aktuelle Zustände der Objekte zu einem Zeitpunkt t darstellen, zusammen mit Daten, die ihre Interaktionen darstellen, und um die empfangenen Daten zu verarbeiten, um als Ausgabe Daten zu erzeugen, die vorhergesagte nachfolgende Zustände der Objekte zu einem Zeitpunkt t+1 darstellen, die vorhergesagte Folgen der Interaktionen zwischen den Objekten sind, wobei das Verfahren Folgendes umfasst:

Empfangen, durch ein neuronales Interaktionskomponenten-Netzwerk (212), einer Eingabe, die (i) Zustände einer oder mehrerer Empfängereinheiten und einer oder mehrerer Sendereinheiten, und (ii) Attribute einer oder mehrerer Beziehungen zwischen der einen oder den mehreren Empfängereinheiten und der einen oder den mehreren Sendereinheiten umfasst, wobei die eine oder mehreren Empfängereinheiten und die eine oder mehreren Sendereinheiten bewegliche oder stationäre Objekte sind;

Verarbeiten der empfangenen Eingabe unter Verwendung des neuronalen Interaktionskomponenten-Netzwerks, um als Ausgabe mehrere Effekte der Beziehungen zwischen der einen oder den mehreren Empfängereinheiten und der einen oder den mehreren Sendereinheiten zu erzeugen; und

Verarbeiten (i) der Zustände der einen oder mehreren Empfängereinheiten und der einen oder mehreren Sendereinheiten, und (ii) der mehreren Effekte der Beziehungen zwischen der einen oder den mehreren Empfängereinheiten und der einen oder den mehreren Sendereinheiten unter Verwendung einer dynamischen Komponente, die ein neuronales Netzwerk mit dynamischer Komponente umfasst, um als Ausgabe eine jeweilige Vorhersage eines nachfolgenden Zustands jeder der einen oder mehreren Empfängereinheiten und der einen oder mehreren Sendereinheiten zu erzeugen;

wobei das Ausgeben der jeweiligen Vorhersage des nachfolgenden Zustands jeder der einen oder mehreren Empfängereinheiten und der einen oder mehreren Sendereinheiten das Ausgeben einer Vorhersage der Dynamik der einen oder mehreren Empfängereinheiten und der einen oder mehreren Sendereinheiten umfasst, um eine Kollision zwischen den Objekten auf der Grundlage der Starrkörperdynamik zu erkennen.

15. Computerspeichermedium, das mit Anweisungen codiert ist, die, wenn sie von einem oder mehreren Computern ausgeführt werden, den einen oder die mehreren Computer dazu veranlassen, ein Verfahren nach Anspruch 14 durchzuführen.

## Revendications

1. Système de réseau neuronal d'interaction mis en oeuvre par un ou plusieurs ordinateurs pour analyser des états actuels et prédire des états futurs d'objets du monde réel en interaction, dans lequel le système de réseau neuronal d'interaction inclut plusieurs réseaux neuronaux qui sont formés pour recevoir des données représentant des états actuels des objets à un instant t, conjointement avec des données représentant leurs interactions et pour traiter les données reçues pour générer en tant que sortie des données représentant des états ultérieurs prédits des objets à un instant t + 1 qui sont des conséquences prédites des interactions entre les objets ; dans lequel le système comprend :

un composant d'interaction comprenant un réseau neuronal de composant d'interaction (212) configuré pour :

recevoir en entrée (i) des états (206) d'une ou plusieurs entités réceptrices et d'une ou plusieurs entités émettrices, et (ii) des attributs (208) d'une ou plusieurs relations entre les une ou plusieurs entités réceptrices et les une ou plusieurs entités émettrices, dans lequel les une ou plusieurs entités réceptrices et les une ou plusieurs entités émettrices sont des objets mobiles ou stationnaires ; et

traiter l'entrée reçue pour produire en sortie plusieurs effets des relations entre les une ou plusieurs entités réceptrices et les une ou plusieurs entités émettrices ;

un composant dynamique comprenant un réseau neuronal de composant dynamique configuré pour :

recevoir en entrée (i) les états des une ou plusieurs entités réceptrices et des une ou plusieurs entités émettrices, et (ii) les plusieurs effets des relations entre les une ou plusieurs entités réceptrices et les une ou plusieurs entités émettrices ; et

traiter l'entrée reçue pour produire en tant que sortie une prédiction respective d'un état ultérieur de chacune des une ou plusieurs entités réceptrices et des une ou plusieurs entités émettrices ; dans lequel la sortie de la prédiction respective de l'état ultérieur de chacune des une ou plusieurs entités réceptrices et des une ou plusieurs entités émettrices comprend la sortie d'une prédiction de la dynamique des une ou plusieurs entités réceptrices et des une ou plusieurs entités émettrices, de manière à détecter une collision entre les objets sur la base de la dynamique des corps rigides.

2. Système selon la revendication 1, dans lequel une entité réceptrice comprend une entité qui est affectée par une ou plusieurs entités émettrices par le biais d'une ou plusieurs relations respectives et/ou
dans lequel un attribut relationnel d'une relation entre une entité réceptrice et une entité émettrice décrit les relations entre l'entité réceptrice et l'entité émettrice.

3. Système selon la revendication 1 ou 2, dans lequel (i) les états des une ou plusieurs entités réceptrices et des une ou plusieurs entités émettrices, et (ii) les attributs relationnels des une ou plusieurs relations entre les une ou plusieurs entités réceptrices et les une ou plusieurs entités émettrices sont représentés sous la forme d'un multigraphe dirigé attribué comprenant plusieurs noeuds pour chaque entité et une ou plusieurs arêtes dirigées pour chaque relation indiquant une influence d'une entité sur une autre.

4. Système selon l'une quelconque des revendications précédentes, dans lequel les une ou plusieurs relations entre les une ou plusieurs entités réceptrices et les une ou plusieurs entités émettrices comprennent des interactions binaires entre une entité réceptrice et une entité émettrice, et

dans lequel chaque interaction binaire est représentée par un 3-tuple comprenant (i) un index d'une entité réceptrice respective, (ii) un index d'une entité émettrice respective, et (iii) un vecteur contenant des attributs relationnels de l'entité réceptrice respective et de l'entité émettrice respective et/ou
dans lequel les une ou plusieurs relations entre les une ou plusieurs entités réceptrices et les une ou plusieurs entités émettrices comprennent des interactions d'ordre élevé, et
dans lequel chaque interaction d'ordre élevé est représentée par un (2m-1)-tuple, où m représente l'ordre de l'interaction.

5. Système selon l'une quelconque des revendications précédentes,
dans lequel le réseau neuronal de composant d'interaction comprend un premier perceptron multicouche (MLP) et le réseau neuronal de composant dynamique comprend un deuxième MLP.

6. Système selon la revendication 5, dans lequel le traitement de l'entrée reçue pour produire comme sortie plusieurs effets des relations entre les une ou plusieurs entités réceptrices et les une ou plusieurs entités émettrices comprend les étapes consistant à :

définir (i) une matrice d'état comme une matrice dont la i-ème colonne représente un état de l'entité i, (ii) une matrice de récepteur comme une matrice NOxNR, où NO représente le nombre total d'entités et NR représente le nombre total de relations, et dans lequel chaque colonne de la matrice de récepteur contient des entrées nulles sauf pour la position d'une entité qui est un récepteur des relations correspondantes, et (iii) une matrice d'émetteur comme une matrice NOxNR, dans lequel chaque colonne de la matrice d'émetteur contient des entrées nulles sauf pour la position d'une entité qui est un émetteur des relations correspondantes ;
multiplier la matrice de récepteur définie et la matrice d'émetteur définie par la matrice d'état définie ;
concaténer des matrices multipliées pour générer une entrée pour le premier MLP ;
traiter l'entrée en utilisant le premier MLP pour produire en sortie plusieurs effets des relations entre les une ou plusieurs entités réceptrices et les une ou plusieurs entités émettrices, dans lequel la sortie produite comprend une matrice d'effets dont les colonnes représentent les plusieurs effets des relations entre les une ou plusieurs entités réceptrices et les une ou plusieurs entités émettrices.

7. Système selon la revendication 6, dans lequel les relations entre les une ou plusieurs entités réceptrices et les une ou plusieurs entités émettrices comprennent des relations de différents types, et dans lequel la concaténation des matrices multipliées comprend en outre la concaténation des matrices multipliées et d'une matrice représentant les relations de différents types pour générer une entrée pour le deuxième MLP ; ou
dans lequel le traitement de l'entrée reçue pour produire en sortie une prédiction respective de l'état de chacune des une ou plusieurs entités réceptrices et des une ou plusieurs entités émettrices comprend les étapes consistant à :

multiplier la matrice d'effets par une transposée de la matrice de récepteur définie ;
concaténer la matrice d'effets multipliée avec la transposition de la matrice de récepteur définie avec la matrice d'état définie pour générer une entrée pour le deuxième MLP ;
traiter l'entrée en utilisant le deuxième MLP pour produire en tant que sortie une prédiction respective d'un état ultérieur de chacune des une ou plusieurs entités réceptrices et des une ou plusieurs entités émettrices.

8. Système selon la revendication 6 ou 7, dans lequel, pendant un processus d'entraînement du système, les matrices d'émetteur et de récepteur sont constantes.

9. Système selon l'une quelconque des revendications précédentes, dans lequel le nombre des plusieurs effets de sortie des relations entre les une ou plusieurs entités réceptrices et les une ou plusieurs entités émettrices est égal au nombre de relations d'entrée entre les une ou plusieurs entités réceptrices et les une ou plusieurs entités émettrices.

10. Système selon l'une quelconque des revendications précédentes, dans lequel le traitement de l'entrée reçue pour produire en tant que sortie une prédiction respective d'un état ultérieur de chacune des une ou plusieurs entités réceptrices et des une ou plusieurs entités émettrices comprend l'agrégation des plusieurs effets reçus des relations entre les une ou plusieurs entités réceptrices et les une ou plusieurs entités émettrices en utilisant une ou plusieurs opérations commutatives et associatives, dans lequel les une ou plusieurs opérations commutatives et associatives comprennent optionnellement des sommations par éléments.

11. Système selon l'une quelconque des revendications précédentes, dans lequel la prédiction respective produite de l'état ultérieur de chacune des une ou plusieurs entités réceptrices et des une ou plusieurs entités émettrices comprend plusieurs états d'entité correspondant aux états d'entité réceptrice ultérieurs et aux états d'entité émettrice ultérieurs, et/ou
dans lequel le système est en outre configuré pour analyser la prédiction respective produite de l'état ultérieur de chacune des une ou plusieurs entités réceptrices et des une ou plusieurs entités émettrices pour prédire des propriétés globales des une ou plusieurs entités réceptrices et des une ou plusieurs entités émettrices.

12. Système selon l'une quelconque des revendications précédentes, dans lequel le composant d'interaction utilise un premier approximateur de fonction pour modéliser les relations entre entités, et
dans lequel le composant dynamique utilise un deuxième approximateur de fonction pour modéliser l'état de l'environnement dans lequel les entités résident.

13. Système selon l'une quelconque des revendications précédentes, dans lequel le composant d'interaction et le composant dynamique sont entraînés indépendamment et/ou
dans lequel le composant d'interaction et le composant dynamique sont entraînés bout à bout en utilisant une technique d'optimisation basée sur le gradient.

14. Procédé mis en oeuvre par un système de réseau neuronal d'interaction mis en oeuvre par un ou plusieurs ordinateurs pour analyser des états actuels et prédire des états futurs d'objets du monde réel en interaction, dans lequel le système de réseau neuronal d'interaction inclut plusieurs réseaux neuronaux qui sont formés pour recevoir des données représentant des états actuels des objets à un instant t, conjointement avec des données représentant leurs interactions et pour traiter les données reçues pour générer en tant que sortie des données représentant des états ultérieurs prédits des objets à un instant t + 1 qui sont des conséquences prédites des interactions entre les objets, le procédé comprenant les étapes consistant à :

recevoir, par un réseau neuronal de composant d'interaction (212), une entrée comprenant (i) des états d'une ou plusieurs entités réceptrices et d'une ou plusieurs entités émettrices, et (ii) des attributs d'une ou plusieurs relations entre les une ou plusieurs entités réceptrices et les une ou plusieurs entités émettrices, dans lequel les une ou plusieurs entités réceptrices et les une ou plusieurs entités émettrices sont des objets mobiles ou stationnaires ;
traiter l'entrée reçue en utilisant le réseau neuronal de composant d'interaction pour produire en sortie plusieurs effets des relations entre les une ou plusieurs entités réceptrices et les une ou plusieurs entités émettrices ; et
traiter (i) les états d'une ou plusieurs entités réceptrices et des une ou plusieurs entités émettrices, et (ii) des plusieurs effets des relations entre les une ou plusieurs entités réceptrices et les une ou plusieurs entités émettrices en utilisant un composant dynamique comprenant un réseau neuronal de composant dynamique pour produire en sortie une prédiction respective d'un état ultérieur de chacune des une ou plusieurs entités réceptrices et des une ou plusieurs entités émettrices ;
dans lequel la sortie de la prédiction respective de l'état ultérieur de chacune des une ou plusieurs entités réceptrices et des une ou plusieurs entités émettrices comprend la sortie d'une prédiction de la dynamique des une ou plusieurs entités réceptrices et des une ou plusieurs entités émettrices, de manière à détecter une collision entre les objets sur la base de la dynamique des corps rigides.

15. Support de stockage informatique codé avec des instructions qui, lorsqu'elles sont exécutées par un ou plusieurs ordinateurs, amènent les un ou plusieurs ordinateurs à exécuter un procédé selon la revendication 14.

FIG. 1

EP 3 446 257 B1

**States of receiver entities and sender entities 206**

**Attributes of relationships between receiver and sender entities 208**

**Interaction Component 202**

Neural Network Input Generator 210

Interaction Component Neural Network 212

**Effects of relationships between receiver entities and sender entities 214**

**Dynamical Component 204**

Neural Network Input Generator 220

Dynamical Component Neural Network 216

**Prediction of states of receiver entities and sender entities 218**

FIG. 2

300

Receive as input (i) states of one or more receiver entities and one or more sender entities, and (ii) attributes of one or more relationships between the one or more receiver entities and one or more sender entities

302

Process received input using an interaction reasoning component to produce as output multiple effects of the relationships between the one or more receiver entities and one or more sender entities

304

Process (i) states of the one or more receiver entities and one or more sender entities, and (ii) multiple effects of the relationships between the one or more receiver entities and one or more sender entities using a dynamical reasoning component to produce as output a respective prediction of the state of each of the one or more receiver entities and one or more sender entities

306

FIG. 3

400

Define (i) state matrix, (ii) receiver matrix, and (iii) sender matrix
402

Multiply defined receiver matrix and defined sender matrix by defined state matrix
404

Concatenate the multiplied matrices to generate an input for the interaction reasoning component
406

Process input using the interaction reasoning component to produce as output multiple effects of the relationships between the one or more receiver entities and one or more sender entities
408

FIG. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ROOZBEH MOTTAGHI et al.** What happens if..." Learning to Predict the Effect of Forces in Images. *arXiv: 1603.05600*